# EUROPEAN PATENT APPLICATION

(11) **EP 2 873 930 A1**
(43) Date of publication of application: **20.05.2015**
(21) Application number: 13816061.9
(22) Date of filing: 01.07.2013
(51) Int. Cl.: F24F 11/02

(54) **AIR CONDITIONING MANAGEMENT DEVICE AND AIR CONDITIONING MANAGEMENT SYSTEM**

(30) Priority: 09.07.2012 JP 2012153721
(71) Applicant: Panasonic Intellectual Property Management Co., Ltd., Osaka-shi, Osaka 540-6207 (JP)
(72) Inventor: KADOTA, Atsushi, Osaka-shi, Osaka 540-6207 (JP); TOKUNAGA, Yoshihiko, Osaka-shi, Osaka 540-6207 (JP); OGAWA, Takeshi, Osaka-shi, Osaka 540-6207 (JP); MISE, Atsushi, Osaka-shi, Osaka 540-6207 (JP)
(74) Representative: Appelt, Christian W.
(86) International application number: PCT/JP2013/004075
(87) International publication number: WO 2014/010194

(57) **Abstract**

The air conditioning management device in accordance with the present invention is an air conditioning management device for management of an air conditioning device for varying a temperature of a space, and includes: an operation history obtaining unit configured to obtain an operation history defined as a history of operation information including an operation state of the air conditioning device; an environmental information obtaining unit configured to obtain an environmental history defined as a history of environmental information indicative of an environmental state defined as a state of an environment of an inside of the space or an outside of the space; a storage unit configured to store a combination of the operation information and the environmental information which are associated with each other on a basis of time in accordance with the operation history and the environmental history; and an algorithm generation unit configured to refer to the storage unit and generate an operation algorithm defining a condition of the environmental state used for changing the operation state of the air conditioning device on a basis of the operation information and the environmental information.

## Description

### Technical Field

The present invention relates to air conditioning management devices and air conditioning management systems.

### Background Art

In recent years, social demand for saving energy has increased.

However, in actual air conditioning management, operations of air conditioning devices such as coolers and heaters are not always appropriate in view of comfort and energy saving. Especially, with regard to indoor air conditioning management (e.g., temperature management) in which energy saving and comfort are complexly related, an intended temperature is customary selected for easy management.

For example, users in offices, premises, or factories are under an air conditioned environment managed by a manager, and some of them may express discontent with a situation where they cannot control their air conditioned environment.

In view of this, there has been proposed a method of collecting user's demands for air conditioned environments from input terminals to be controlled by individuals, and performing air conditioning management on the basis of the collected demands (e.g., see document 1 [JP 2007-255835 A]).

Generally, in a case of indoor air conditioning management, an indoor air conditioned environment may be affected by an outside environment (e.g., an outside air temperature). However, air conditioning management is done without sufficiently considering the outdoor environment such as an outside air temperature, and therefore the indoor space is not likely to be kept in a comfortable state for a user in some cases. Further, comfortable air conditioned environments may be different for different users.

### Summary of Invention

In view of the above insufficiency, the present invention has aimed to propose an air conditioning management system which can realize comfort of the air conditioned environment suitable for a user in consideration of the outside environment.

The air conditioning management device of the first aspect in accordance with the present invention is an air conditioning management device for management of an air conditioning device for varying a temperature of a space, and includes: an operation history obtaining unit configured to obtain an operation history defined as a history of operation information including an operation state of the air conditioning device; an environmental information obtaining unit configured to obtain an environmental history defined as a history of environmental information indicative of an environmental state defined as a state of an environment of an inside of the space or an outside of the space; a storage unit configured to store a combination of the operation information and the environmental information which are associated with each other on a basis of time in accordance with the operation history and the environmental history; and an algorithm generation unit configured to refer to the storage unit and generate an operation algorithm defining a condition of the environmental state used for changing the operation state of the air conditioning device on a basis of the operation information and the environmental information.

In the air conditioning management device of the second aspect in combination with the first aspect, the operation algorithm defines an operation of changing the operation state of the air conditioning device when a current state of the environment satisfies the condition.

In the air conditioning management device of the third aspect in combination with the second aspect, the operation algorithm defines an operation of changing the operation state of the air conditioning device from a resting state to a working state when the current state of the environment becomes identical to a first environmental state. The algorithm generation unit is configured to calculate an average of the environmental state regarding the environmental information associated with time at which the operation state of the air conditioning device has been changed from the resting state to the working state according to the operation history and the environmental history, and select the average of the environmental state as the first environmental state.

In the air conditioning management device of the fourth aspect in combination with the second or third aspect, the operation algorithm defines an operation of changing the operation state of the air conditioning device from a working state to a resting state when the current state of the environment becomes identical to a second environmental state. The algorithm generation unit is configured to calculate an average of the environmental state regarding the environmental information associated with time at which the operation state of the air conditioning device has been changed from the working state to the resting state according to the operation history and the environmental history, and select the average of the environmental state as the second environmental state.

In the air conditioning management device of the fifth aspect in combination with the first aspect, the air conditioning management device is configured to manage a plurality of the air conditioning devices for varying temperatures of a plurality of the spaces individually. The operation history obtaining unit is configured to obtain, for each of the plurality of the spaces, the operation history of a corresponding one of the plurality of the air conditioning devices. The environmental information obtaining unit is configured to obtain, for each of the plurality of the spaces, the environmental history corresponding thereto. The storage unit is configured to store, for each of the plurality of the spaces, the combination of the operation information and the environmental information which are associated with each other on the basis of time. The algorithm generation unit is configured to classify the plurality of the spaces into a plurality of groups, and generate the operation algorithm for each of the plurality of groups.

In the air conditioning management device of the sixth aspect in combination with the fifth aspect, the algorithm generation unit is configured to: decide, for each of the plurality of the spaces, a third environmental state defined as an average of the environmental state regarding the environmental information associated with time at which the operation state of the air conditioning device has been changed from a resting state to a working state; and classify the plurality of the spaces into the plurality of groups in accordance with results of comparison of the third environmental state with a first threshold.

In the air conditioning management device of the seventh aspect in combination with the sixth aspect, the algorithm generation unit is configured to, with regard to the environmental history of each of the plurality of the spaces, select the environmental state regarding the environmental information associated with time at which the operation state of the air conditioning device has been changed from the resting state to the working state, and decide the first threshold in accordance with the environmental state indicated by the environmental information selected.

In the air conditioning management device of the eighth aspect in combination with any one of the fifth to seventh aspects, the operation algorithm defines an operation of changing the operation state of the air conditioning device from a resting state to a working state when a current state of the environment becomes identical to a fourth environmental state. The algorithm generation unit is configured to, for each of the plurality of groups, calculate an average of the environmental state regarding the environmental information associated with time at which the operation state of the air conditioning device has been changed from the resting state to the working state according to the operation history and the environmental history, and select the average of the environmental state as the fourth environmental state.

In the air conditioning management device of the ninth aspect in combination with any one of the fifth to eighth aspects, the algorithm generation unit is configured to: decide, for each of the plurality of the spaces, a fifth environmental state defined as an average of the environmental state regarding the environmental information associated with time at which the operation state of the air conditioning device has been changed from a working state to a resting state; and classify the plurality of the spaces into the plurality of groups in accordance with results of comparison of the fifth environmental state with a second threshold.

In the air conditioning management device of the tenth aspect in combination with the ninth aspect, the algorithm generation unit is configured to, with regard to the environmental history of each of the plurality of the spaces, select the environmental state regarding the environmental information associated with time at which the operation state of the air conditioning device has been changed from the working state to the resting state, and decide the second threshold in accordance with the environmental state indicated by the environmental information selected.

In the air conditioning management device of the eleventh aspect in combination with any one of the fifth, ninth, and tenth aspects, the operation algorithm defines an operation of changing the operation state of the air conditioning device from a working state to a resting state when a current state of the environment becomes identical to a sixth environmental state. The algorithm generation unit is configured to, for each of the plurality of groups, calculate an average of the environmental state regarding the environmental information associated with time at which the operation state of the air conditioning device has been changed from the working state to the resting state according to the operation history and the environmental history, and select the average of the environmental state as the sixth environmental state.

The air conditioning management system of the twelfth aspect in accordance with the present invention includes: an air conditioning device configured to vary a temperature of a space; an air conditioning management device configured to manage the air conditioning device; and an environment detector configured to detect environmental information indicative of a state of an environment of an inside of the space or an outside of the space. The air conditioning management device is defined by any one of the first to eleventh aspects. The environmental information obtaining unit is configured to obtain the environmental information from the environment detector.

### Brief Description of the Drawings

FIG. 1 is a block diagram illustrating a configuration of an air conditioning management system of the embodiment 1.
FIG. 2 is a diagram illustrating an entire configuration of the air conditioning management system of the embodiment 1.
FIG. 3 is a table illustrating data stored in a storage unit of the air conditioning management system of the embodiment 1.
**FIG. 4** is a flow chart illustrating a process of creating a control algorithm of the air conditioning management system of the embodiment 1.
**FIG. 5** is a diagram illustrating the control algorithm of the air conditioning management system of the embodiment 1.
**FIG. 6** is a diagram illustrating an entire configuration of an air conditioning management system of the embodiment 2.
**FIG. 7** is a block diagram illustrating a configuration of the air conditioning management system of the embodiment 2.
**FIG. 8** is a diagram illustrating an entire configuration of an air conditioning management system of the embodiment 3.
**FIG. 9** is a flow chart illustrating a process of creating a control algorithm of the air conditioning management system of the embodiment 3.
**FIG. 10** is a diagram illustrating the control algorithm of the air conditioning management system of the embodiment 3.

### Description of Embodiments

### (Embodiment 1)

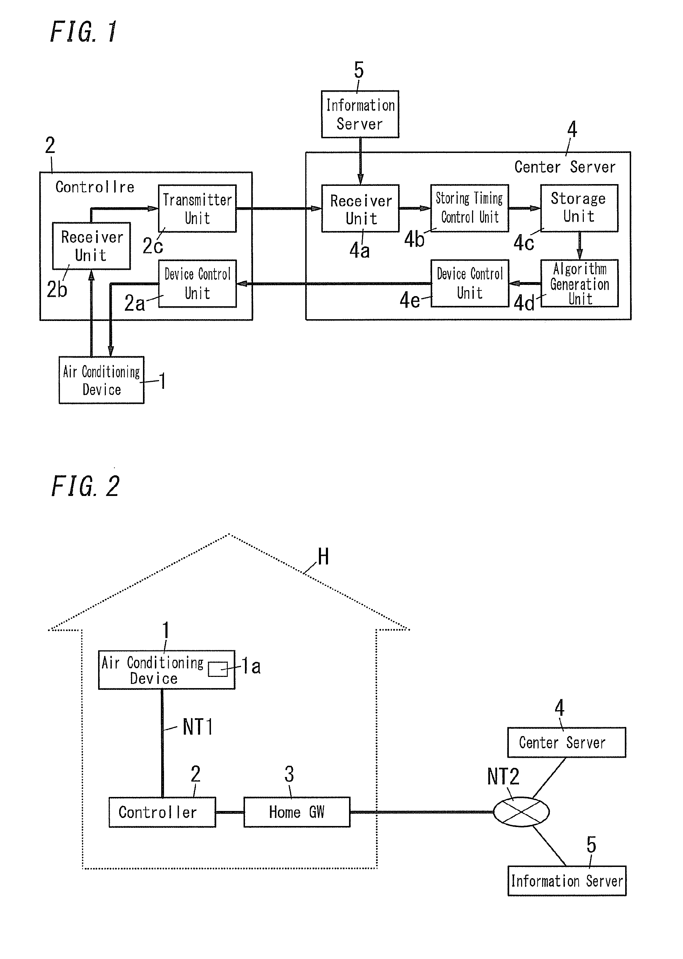

FIG. 2 illustrates a whole configuration of an air conditioning management system of the present embodiment. The air conditioning management system includes an air conditioning device **1,** a controller **2,** a home gateway **3,** a center server **4,** and an information server **5.** Note that, the controller **2** and the center server **4** constitute an air conditioning management device configured to manage the air conditioning device 1 for varying a temperature of a space **H.**

The air conditioning device 1 is situated in the space (e.g., a floor in a building, a room, and a large public area) **H** whose air conditioned environment is managed by the present system. Further, the air conditioning device **1** and the controller **2** are connected to the home network **NT1.** The home network **NT1** is connected to the Internet **NT2** through the home gateway 3. The center server **4** and the information server **5** are on the Internet **NT2.** Note that, the home network **NT1** may conform to any of power line communications, communications suitable for LAN cables, communications for dedicated cables, or wireless communications.

**FIG.** 1 illustrates a block configuration of the air conditioning management system. Note that, in **FIG. 1****,** the home gateway 3 is omitted.

The air conditioning device 1 has a function of an air conditioner configured to vary a temperature (thermal environment) of the space **H.** In short, the air conditioning device **1** is configured to vary the temperature of the space **H.** The air conditioning device **1** includes a manual controller **1a.** By manually operating the manual controller **1a,** a user can set an operation state (e.g., a working state and a resting state), the intended temperature, and the like. Further, the working or resting state, the intended temperature, and the like of the air conditioning device **1** are set according to remote control by the controller **2.** Further, the air conditioning device **1** has a function of sending information of an actual operation history (e.g., histories of the working state, the resting state, the intended temperature, and the like) to the controller **2.** In other words, the air conditioning device 1 is configured to send information (operation information) indicative of its own operation state (the working state, the resting state, the intended temperature, and the like) to the controller **2.** In short, the air conditioning device **1** sends the operation history defined as a history of the operation information of the air conditioning device 1 to the controller **2.**

The controller **2** includes a device control unit **2a,** a receiver unit **2b,** and a transmitter unit **2c.**

The device control unit **2a** is connected to the home network **NT1.** The device control unit **2a** turns on and off the air conditioning device **1** and selects the intended temperature of the air conditioning device **1,** and the like. The device control unit **2a** performs remote control on the air conditioning device **1.**

The receiver unit **2b** is connected to the home network **NT1** to receive information from the air conditioning device **1.** This receiver unit **2b** serves as an operation history obtaining unit. In other words, the receiver unit **2b** functions as the operation history obtaining unit configured to obtain the operation history defined as the history of operation information of the air conditioning device **1.**

The transmitter unit **2c** is connected to the home network **NT1** to send information to the center server **4** by way of the home gateway **3.**

The center server **4** includes a receiver unit **4a,** a storing timing control unit **4b,** a storage unit **4c,** an algorithm generation unit **4d,** and a device control unit **4e.**

The receiver unit **4a** receives information from the controller 2 and the information server **5** by way of the Internet **NT2.**

The storing timing control unit **4b** sets timings of storing various types of information in the storage unit **4c.**

The storage unit **4c** stores the various types of information.

The algorithm generation unit **4d** creates a control algorithm of setting working and resting timings and the intended temperature of the air conditioning device 1. The device control unit 4e sends this control algorithm (operation algorithm) to the controller **2.**

Hereinafter, an operation of the present air conditioning management system is described.

First, the air conditioning device 1 sends a past operation history information (e.g., histories of the working state, the resting state, the intended temperature, and the like) to the controller **2.** The operation history information is information indicative of the operation history. In short, the air conditioning device **1** sends the operation history defined as a history of the operation information to the controller **2.** This operation history information (operation information) may be sent at a regular interval or when settings (the working state, the resting state, and the intended temperature,) of the air conditioning device **1** are set in accordance with manual operations on the manual controller **1a.** Further, the operation history information includes information of an installation site of the air conditioning device **1** (e.g., a living room and a kitchen). For example, the operation information includes the installation site, the operation state (working and resting state), and the intended temperature of the air conditioning device **1.**

In the controller **2,** the receiver unit **2b** obtains the operation history information from the air conditioning device **1,** and the transmitter unit **2c** sends the operation history information to the center server **4.** In the center server **4,** the receiver unit 4a obtains the operation history information from the controller **2.**

The information server **5** stores environmental information (e.g., an outside air temperature and humidity) regarding weather of a region including a location of the space **H.** The receiver unit **4a** of the center server **4** obtains the environmental information from the information server **5.** By doing so, the receiver unit **4a** obtains an environmental history defined as a history of the environmental information. The environmental information indicates an environmental state defined as a state of an environment (an environment of an inside of the space **H** or an outside of the space **H).** The environmental state means a numerical value indicative of the state of the environment. Examples of the environmental state include a temperature of the inside of the space **H,** a temperature of the outside of the space **H** (outside air temperature), a humidity of the inside of the space **H,** and a humidity of the outside of the space **H.** In summary, the information server **5** serves as an environment detector configured to detect environmental information indicative of a state of an environment of an inside of the space **H** or an outside of the space **H,** and the receiver unit **4a** of the center server **4** serves as an environmental information obtaining unit configured to obtain an environmental history defined as a history of environmental information indicative of an environmental state defined as a state of an environment of an inside of the space **H** or an outside of the space **H.**

The operation history information includes a time stamp indicative of time of an event such as operation (e.g., turning on and off the air conditioning device **1** and changing the intended temperature of the air conditioning device **1)** and change in the operation state. In short, the operation information indicates the operation state at specific time. In view of this, the operation history is time series data of the operation state.

The environmental information includes a time stamp indicative of time of measuring the outside air temperature, the humidity, or the like. In short, the environmental information indicates the environmental state at specific time. In view of this, the environmental history is time series data of the environmental state.

The storing timing control unit **4b** of the center server **4** selects information to be stored in the storage unit **4c** on the basis of the time stamp included in such information. In other words, the storing timing control unit **4b** associates the operation information and the environmental information with each other on the basis of time in accordance with the operation history and the environmental history. For example, the storing timing control unit 4b obtains the operation information indicative of the operation state at time closest to a predetermined time from the operation history, and obtains the environmental information indicative of the environmental state at time closest to the predetermined time from the environmental history, and associates the obtained operation information (the operation state) and the obtained environmental information (the environmental state) with each other. Thereafter, the storing timing control unit 4b stores the combination of the operation information and the environmental information associated with each other on the basis of time in the storage unit **4c.** Such time may include predetermined time of every day, time at which the air conditioning device **1** is operated by a user (e.g., time of operation of setting the working state or the resting state, and time of operation of changing the intended temperature), and time at which a person is present in or absent from the space **H** (e.g., a timing given by a human detector).

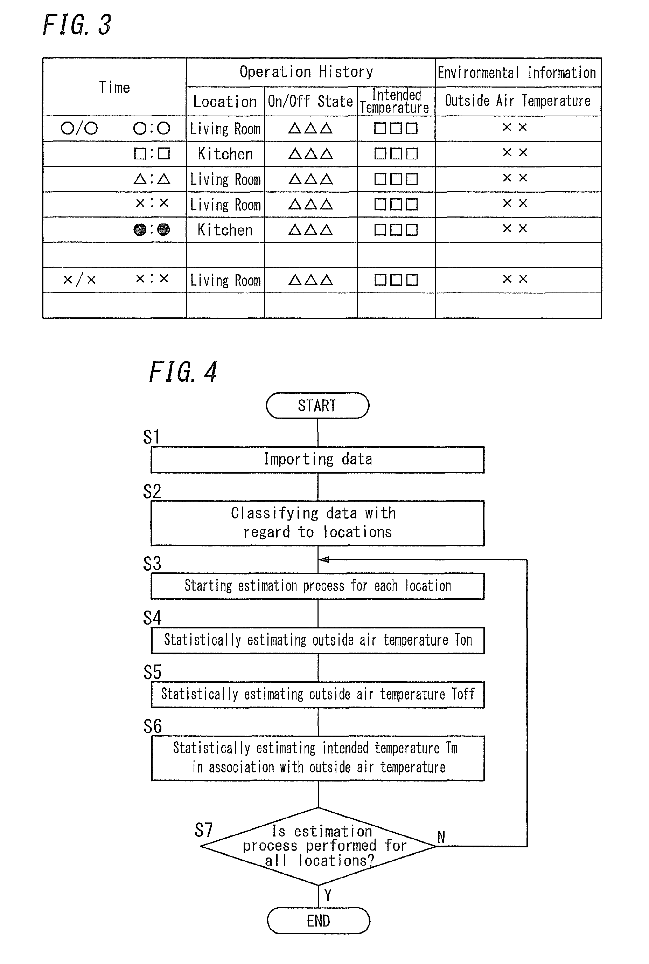

The storing timing control unit **4b** associates the operation history information and the environmental information at time (or near this time) determined as described above, with each other, and stores them in the storage unit **4c,** continuously. Consequently, the storage unit **4c** stores the combination of the operation information and the environmental information associated with each other on the basis of time, in accordance with the operation history and the environmental history. For example, as shown in **FIG. 3****,** the operation history information and the environmental information at the time decided by the storing timing control unit **4b** are associated with each other and stored in series in the storage unit **4c.** **FIG. 3** shows a table in which time, the operation history (the operation information), and the environmental information are associated with each other. The operation history includes items of the location of the air conditioning device **1,** on and off state (the working state and the resting state) of the air conditioning device 1, and the intended temperature of the air conditioning device **1.**

Thereafter, the algorithm generation unit **4d** of the center server **4** decides the optimal control algorithm of the air conditioning device **1** on the basis of the information stored in the storage unit **4c,** and updates the control algorithm.

In the present embodiment, the algorithm generation unit **4d** generates the operation algorithm defining a condition (change condition) of the environmental state for changing the operation state of the air conditioning device **1.**

The operation algorithm includes a first algorithm (operation change algorithm) defining a condition (operation change condition) of the environmental state for changing the operation state of the air conditioning device **1,** and a second algorithm (temperature setting algorithm) defining a condition (temperature setting condition) of the environmental state for setting the intended temperature of the air conditioning device **1.**

The operation change algorithm defines an operation of changing the operation state of the air conditioning device **1** when a current state of the environment satisfies the operation change condition. In this regard, the operation change condition includes a condition (working condition) for changing the air conditioning device **1** from the resting state to the working state, and a condition (resting condition) for changing the air conditioning device 1 from the working state to the resting state.

In summary, the operation change algorithm defines an operation of changing the operation state of the air conditioning device 1 from the resting state to the working state when the current state of the environment satisfies the working condition. The working condition is that the current state of the environment becomes identical to a first environmental state. In a case where the environmental state is an outside air temperature, the working condition is that the current outside air temperature becomes equal to or more than an on temperature.

The first environmental state (the on temperature) is decided based on the environmental state (the outside air temperature) at time when the operation state of the air conditioning device **1** has been changed from the resting state to the working state. For example, the algorithm generation unit **4d** calculates an average of the environmental state regarding the environmental information associated with time (working time) at which the operation state of the air conditioning device 1 has been changed from the resting state to the working state according to the operation history and the environmental history, and select the average of the environmental state as the first environmental state. In brief, the average of the environmental state (the outside air temperature) at time when the operation state of the air conditioning device 1 has been changed from the resting state to the working state is used as the on temperature.

Further, the operation change algorithm defines an operation of changing the operation state of the air conditioning device **1** from the working state to the resting state when the current state of the environment satisfies the resting condition. The resting condition is that the current state of the environment becomes identical to a second environmental state. In a case where the environmental state is an outside air temperature, the resting condition is that the current outside air temperature becomes less than an off temperature.

The second environmental state (the off temperature) is decided based on the environmental state (the outside air temperature) at time when the operation state of the air conditioning device **1** has been changed from the working state to the resting state. For example, the algorithm generation unit **5d** calculates an average of the environmental state regarding the environmental information associated with time (resting time) at which the operation state of the air conditioning device 1 has been changed from the working state to the resting state according to the operation history and the environmental history, and select the average of the environmental state as the second environmental state. In brief, the average of the environmental state (the outside air temperature) at time when the operation state of the air conditioning device 1 has been changed from the working state to the resting state is used as the off temperature.

The temperature setting condition is a condition for setting the current intended temperature of the air conditioning device 1 to a new intended temperature (desired temperature) suitable for the current state of the environment.

In summary, the temperature setting algorithm defines an operation of setting the current intended temperature of the air conditioning device 1 to the desired temperature corresponding to the temperature setting condition when the current state of the environment satisfies the temperature setting condition. The temperature setting condition is that the current state of the environment becomes identical to a predetermined state. In a case where the environmental state is an outside air temperature, the temperature setting condition is that the current outside air temperature is in a predetermined range.

The desired temperature is decided based on the operation state (the intended temperature) of the operation information associated with the environmental state at time when the environmental state becomes identical to a predetermined state. For example, the algorithm generation unit **4d** calculates an average of the intended temperature regarding the operation information associated with the environmental state at time when the environmental state becomes identical to the predetermined state, and selects the average of the intended temperature as the desired temperature. In brief, the average of the intended temperature regarding the operation information associated with the environmental state at time when the environmental state becomes identical to the predetermined state is used as the desired temperature.

**FIG. 4** shows a flow chart illustrating a process of creating the control algorithm by the algorithm generation unit **4d.** In this regard, the environmental information (the environmental state) is the outside air temperature. Further, it is assumed that the air conditioning device 1 operates for cooling in summer.

First, the algorithm generation unit **4d** imports data during a predetermined time period to the current time, from the storage unit **4c** (S1).

Next, the algorithm generation unit **4d** classifies the date imported from the storage unit 4c with regard to the location of the air conditioning device **1 (S2),** and starts to an estimation process with regard to each location **(S3).**

The algorithm generation unit **4d** statistically estimates the outside air temperature (on temperature) Ton (the first environmental information; the first environmental state) for deciding when the air conditioning device 1 starts to work, on the basis of a history of the outside air temperature at time when the working and resting state of the air conditioning device 1 has been switched from the resting state to the working state **(S4).** In more detail, the algorithm generation unit 4d extracts the environmental information (the outside air temperature) corresponding to the operation information indicative of the operation state which satisfies the predetermined (first) working condition (the working and resting state of the air conditioning device **1** has been switched from the resting state to the working state), on the basis of the operation information and the environmental information. Thereafter, the algorithm generation unit **4d** decides a parameter (the outside air temperature **Ton)** used in the operation algorithm, on the basis of the extracted environmental state (the outside air temperature).

For example, the history of the outside air temperature at the time when the working and resting state of the air conditioning device 1 has been switched from the resting state to the working state indicates **Ta1, Ta2,** ..., and **Tan.** In this example, **Ton** is equal to **(Ta1+Ta2+...+Tan)/N.** In summary, the outside air temperature **Ton** is defined as the average of the outside air temperature at time when the working and resting state of the air conditioning device 1 has been switched from the resting state to the working state.

Next, the algorithm generation unit **4d** statistically estimates the outside air temperature (off temperature) **Toff** (the second environmental information; the second environmental state) for deciding when the air conditioning device 1 starts to rest, on the basis of a history of the outside air temperature at time when the working and resting state of the air conditioning device 1 has been switched from the working state to the resting state **(S5).** In more detail, the algorithm generation unit 4d extracts the environmental information (the outside air temperature) corresponding to the operation information indicative of the operation state which satisfies the predetermined (second) working condition (the working and resting state of the air conditioning device **1** has been switched from the working state to the resting state), on the basis of the operation information and the environmental information which are extracted. Thereafter, the algorithm generation unit **4d** decides a parameter (the outside air temperature **Toff)** used in the operation algorithm, on the basis of the extracted environmental state (the outside air temperature).

For example, the history of the outside air temperature at the time when the working and resting state of the air conditioning device **1** has been switched from the working state to the resting state indicates **Tb1, Tb2,** ..., and **Tbn.** In this example, **Toff** is equal to **(Tb1+Tb2+...+Tbn)/N.** In summary, the outside air temperature **Toff** is defined as the average of the outside air temperature at time when the working and resting state of the air conditioning device **1** has been switched from the working state to the resting state.

Next, the algorithm generation unit **4d** statistically estimates the intended temperature (the desired temperature) **Tm** used when the air conditioning device **1** works, in association with the outside air temperature, on the basis of the histories of the intended temperature and the outside air temperature **(S6).** In more detail, the algorithm generation unit **4d** extracts the operation information (the intended temperature) corresponding to the environmental information indicative of the environmental state (the outside air temperature) identical to a predetermined state (predetermined value), on the basis of the operation information and the environmental information. Thereafter, the algorithm generation unit **4d** decides a parameter (the intended temperature **Tm)** used in the operation algorithm, on the basis of the operation information (the intended temperature).

For example, the history of the intended temperature of the air conditioning device **1** at the time when the outside air temperature is equal to the predetermined value **Td1** indicates **Te1, Te2,** ..., and **Ten.** In this example, **Tma** is equal to **(Te1+Te2+...+Ten)/N.** In summary, the intended temperature **Tm (Tma)** corresponding to the outside air temperature **Td1** is defined as the average of the intended temperature at the time when the outside air temperature is equal to the predetermined value **Td1.**

Similarly, the intended temperature **Tm (Tmb)** corresponding to the outside air temperature **Td2** is defined as the average of the intended temperature at the time when the outside air temperature is equal to the predetermined value **Td2,** and the intended temperature **Tm (Tmc)** corresponding to the outside air temperature Td3 is defined as the average of the intended temperature at the time when the outside air temperature is equal to the predetermined value **Td3.** Accordingly, the intended temperature **Tm** is calculated for each outside air temperature.

In summary, the algorithm generation unit **4d** averages one or more the intended temperatures associated with the same state of the environment (the outside air temperature), on the basis of the operation history (the intended temperature) and the environmental information (the outside air temperature), and generates the operation algorithm using the average of the intended temperature. In other words, the algorithm generation unit **4d** calculates the average of the intended temperature with regard to the operation information associated with the environmental information indicative of the environmental state (the outside air temperature) identical to the predetermined state (predetermined value), and generates the operation algorithm using the average of the intended temperature.

After that, the algorithm generation unit **4d** determines whether the process defined by steps **S3** to **S6** is completed for all of the locations **(S7).** When the process defined by steps **S3** to **S6** is not completed for all of the locations, the procedure is returned to step **S3,** and the location is changed, and the above process is performed again. When the process defined by steps **S3** to **S6** is completed for all of the locations, the process shown by the flow chart is ended.

Thereafter, the algorithm generation unit **4d** decides the optimal control algorithm (operation algorithm) of the air conditioning device 1, on the basis of results of estimation of the outside air temperature (on temperature) Ton for deciding when the air conditioning device 1 starts to work, the outside air temperature (off temperature) Toff for deciding when the air conditioning device 1 starts to rest, and the intended temperature (the desired temperature) **Tm** for each outside air temperature.

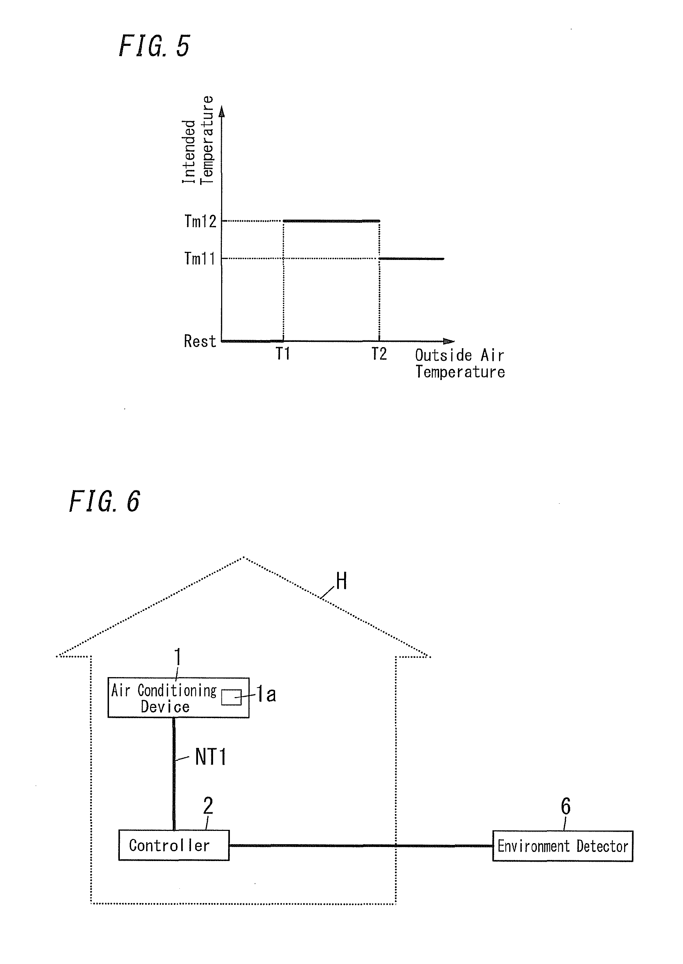

For example, **FIG. 5** shows an example of the control algorithm decided by the algorithm generation unit **4d.**

In this example, both the outside air temperature (on temperature) **Ton** for deciding when the air conditioning device 1 starts to work, and the outside air temperature (off temperature) **Toff** for deciding when the air conditioning device **1** starts to rest are the outside air temperature **T1.** In more detail, when the current outside air temperature (the current state of the environment) is less than the outside air temperature **T1,** the air conditioning device **1** starts to rest, and when the current outside air temperature is equal to or more than the outside air temperature **T1,** the air conditioning device **1** starts to work. Note that, the current outside air temperature can be obtained from the information server **5.** Further, when the outside air temperature (the current outside air temperature) is equal to or more than **T1** but is less than **T2,** the intended temperature of the air conditioning device **1** is set to the intended temperature **Tm12.** When the outside air temperature (the current outside air temperature) is equal to or more than **T2,** the intended temperature of the air conditioning device **1** is set to the intended temperature **Tm11** (< **Tm12).** Note that, the intended temperature **Tm12** is the intended temperature **Tm** calculated for the outside air temperature which is equal to or more than **T1** but is less than **T2,** and the intended temperature **Tm11** is the intended temperature **Tm** calculated for the outside air temperature which is equal to or more than **T2.**

Thereafter, the device control unit **4e** sends this control algorithm to the controller **2.** The device control unit **2a** of the controller **2** performs working and resting the air conditioning device **1,** setting the intended temperature, and the like, on the basis of this control algorithm, thereby realizing remote control on the air conditioning device **1.**

Further, the controller **2** may present this control algorithm to a user in a form of an image or the like, in order to prompt the user to manually operate the air conditioning device 1 in line with this control algorithm.

Further, the environmental information is not limited to the outside air temperature but may be at least one of outside and inside humidifies, or may be a combination of the outside air temperature and humidity.

Further, the control algorithm is updated regularly, and therefore it is possible to use the optimal control algorithm in conformity with usage of the user.

As described above, according to the present embodiment, it is possible to perform the air conditioning control in conformity with usage of an individual user in response to the external environment. Therefore, the present system can realize comfort of the air conditioned environment suitable for a user in consideration of the outside environment.

Note that, the outside air temperature **Ton,** the outside air temperature **Toff,** and the intended temperature **Tm** are calculated by averaging, but may be calculated by least squares. In brief, the average of the intended temperature may be calculated by arithmetic average or least squares.

As described above, the air conditioning management device of the present embodiment is an air conditioning management device for managing an operation of the air conditioning device **1** for varying the temperature of the space H selected as an air conditioned target, and includes the operation history obtaining unit (the receiver unit **2b),** the environmental information obtaining unit (the receiver unit **4a),** the storage unit **4c,** and the algorithm generation unit **4d.** The operation history obtaining unit (the receiver unit **2b)** is configured to obtain the operation history of the working operation and the resting operation on the air conditioning device **1.** The environmental information obtaining unit (the receiver unit **4a)** is configured to obtain the environmental information regarding the environment of the inside of the space **H** or the outside of the space **H.** The storage unit **4c** is configured to store the operation history and the environmental information in association with each other as time series data. The algorithm generation unit **4d** is configured to refer to the storage unit **4c** and generate the operation algorithm defining the states of the environment serving as the conditions that the air conditioning device 1 works and rests, on the basis of the operation history and the environmental information.

Further, in the air conditioning management device of the present embodiment, the algorithm generation unit **4d** is configured to calculate the first environmental information by averaging the environmental information at the time of performing the working operation and the second environmental information by averaging the environmental information at the time of performing the resting operation, on the basis of the operation history and the environmental information. The algorithm generation unit **4d** generates the operation algorithm which works the air conditioning device **1** when the environmental information (the environmental state) obtained by the environmental information obtaining unit (the receiver unit **4a)** becomes identical to the first environmental information (the first environmental state), and rests the air conditioning device 1 when the environmental information (the environmental state) obtained by the environmental information obtaining unit (the receiver unit **4a)** becomes identical to the second environmental information (the second environmental state).

In more detail, the air conditioning management device of the present embodiment includes the following first to fourth features. Note that, the second to fourth features are optional.

In the first feature, the air conditioning management device is an air conditioning management device for management of an air conditioning device **1** for varying a temperature of a space **H,** and includes an operation history obtaining unit (receiver unit **2b),** an environmental information obtaining unit (receiver unit **4a),** a storage unit **4c,** and an algorithm generation unit **4d.** The operation history obtaining unit (the receiver unit **2b)** is configured to obtain an operation history defined as a history of operation information including an operation state of the air conditioning device **1.** The environmental information obtaining unit (the receiver unit **4a)** is configured to obtain an environmental history defined as a history of environmental information indicative of an environmental state defined as a state of an environment of an inside of the space **H** or an outside of the space **H.** The storage unit **4c** is configured to store a combination of the operation information and the environmental information which are associated with each other on a basis of time in accordance with the operation history and the environmental history. The algorithm generation unit **4d** is configured to refer to the storage unit **4c** and generate an operation algorithm defining a condition (the operation change condition) of the environmental state used for changing the operation state of the air conditioning device 1 on a basis of the operation information and the environmental information.

In the second feature realized in combination with the first feature, the operation algorithm defines an operation of changing the operation state of the air conditioning device 1 when a current state of the environment satisfies the condition (the operation change condition).

In the third feature realized in combination with the second feature, the operation algorithm defines an operation of changing the operation state of the air conditioning device 1 from a resting state to a working state when the current state of the environment becomes identical to a first environmental state. The algorithm generation unit **4d** is configured to calculate an average (first average) of the environmental state regarding the environmental information associated with time at which the operation state of the air conditioning device **1** has been changed from the resting state to the working state according to the operation history and the environmental history, and select the average (first average) of the environmental state as the first environmental state.

In the fourth feature realized in combination with the second or third feature, the operation algorithm defines an operation of changing the operation state of the air conditioning device **1** from a working state to a resting state when the current state of the environment becomes identical to a second environmental state. The algorithm generation unit **4d** is configured to calculate an average (second average) of the environmental state regarding the environmental information associated with time at which the operation state of the air conditioning device **1** has been changed from the working state to the resting state according to the operation history and the environmental history, and select the average (second average) of the environmental state as the second environmental state.

In this regard, the air conditioning management system of the present embodiment includes: the air conditioning device **1** for varying the temperature of the space **H** selected as an air conditioned target; the air conditioning management device (the controller **2** and the center server **4)** configured to manage an operation of the air conditioning device **1;** and the environment detector (the information server **5)** configured to detect the environmental information regarding the environment of the inside of the space **H** or the outside of the space **H.** The air conditioning management device (the controller 2 and the center server **4)** includes the operation history obtaining unit (the receiver unit **2b),** the environmental information obtaining unit (the receiver unit **4a),** the storage unit **4c,** and the algorithm generation unit **4d.** The operation history obtaining unit (the receiver unit **2b)** is configured to obtain the operation history of the working operation and the resting operation on the air conditioning device **1.** The environmental information obtaining unit (the receiver unit **4a)** is configured to obtain the environmental information. The storage unit **4c** is configured to store the operation history and the environmental information in association with each other as time series data. The algorithm generation unit **4d** is configured to refer to the storage unit **4c** and generate the operation algorithm defining the states of the environment serving as the conditions that the air conditioning device 1 works and rests, on the basis of the operation history and the environmental information.

In other words, the air conditioning management system of the present embodiment includes: an air conditioning device **1** configured to vary a temperature of a space **H;** an air conditioning management device configured to manage the air conditioning device **1;** and an environment detector (the information server 5) configured to detect environmental information indicative of a state of an environment of an inside of the space **H** or an outside of the space **H.** The air conditioning management device (the controller **2** and the center server **4)** includes the above first feature and optionally the second to fourth features selectively. The environmental information obtaining unit (the receiver unit **4a)** is configured to obtain the environmental information from the environment detector (the information server **5).**

As described above, the air conditioning management device and the air conditioning management system of the present embodiment can perform the air conditioning control in conformity with usage of an individual user in response to the external environment. Therefore, it is possible to provide advantageous effects to realize comfort of the air conditioned environment suitable for a user in consideration of the outside environment.

### (Embodiment 2)

FIG. **6** illustrates a whole configuration of an air conditioning management system of the present embodiment. The air conditioning management system includes an air conditioning device **1,** a controller **2,** and an environment detector **6.**

In the present embodiment, the environment detector **6** is provided to a space **H** whose air conditioned environment is to be managed by the present system, and the controller **2** obtains environmental information (e.g., outside air temperature and humidity) regarding weather of a location of the space **H** from this environment detector **6.** Further, process of storing data and generating algorithms can be executed by the controller **2** instead of an external center server. In short, the controller **2** serves as an air conditioning management device.

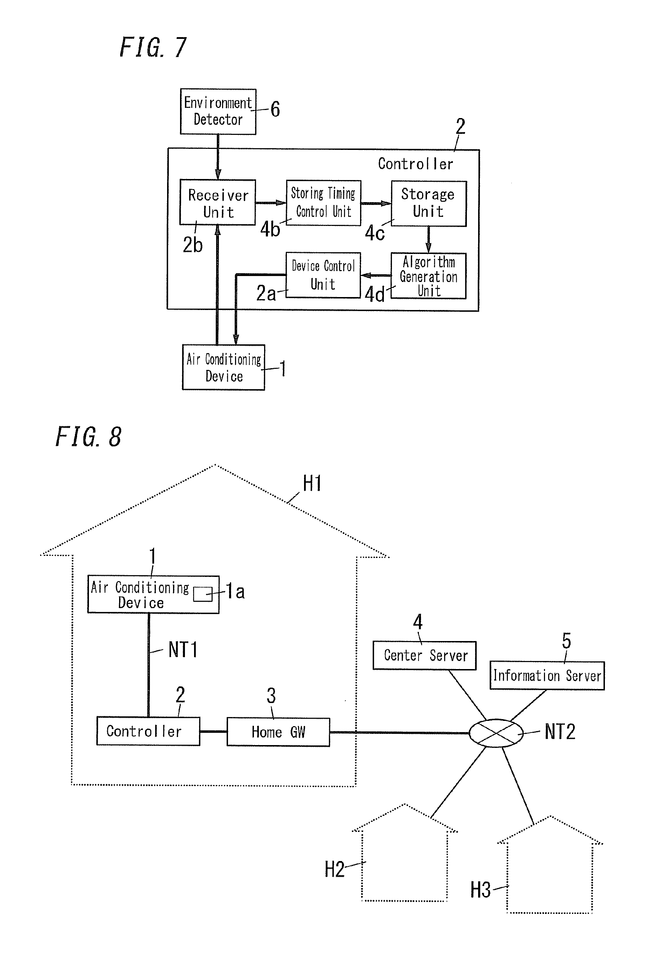

**FIG. 7** illustrates a block configuration of the controller **2.**

The controller **2** includes a device control unit **2a** and a receiver unit **2b** as with the embodiment 1. Further, the controller **2** includes a storing timing control unit **4b,** a storage unit **4c,** and an algorithm generation unit **4d** which are the same as those included in the center server 4 of the embodiment 1.

Further, a group of the device control unit **2a** and the receiver unit **2b** and a group of the storing timing control unit **4b,** the storage unit 4c, and the algorithm generation unit **4d** are configured to send and receive information to and from each other in the controller **2.** Further, the receiver unit **2b** of the controller **2** serves as an environmental information obtaining unit configured to obtain environmental information from the environment detector **6.**

Each unit of the controller **2** operates in a similar manner to the embodiment 1. Thus, it is possible to perform the air conditioning control in conformity with usage of an individual user in response to the external environment. Therefore, the present system can realize comfort of the air conditioned environment suitable for a user in consideration of the outside environment.

### (Embodiment 3)

FIG. 8 illustrates a whole configuration of an air conditioning management system of the present embodiment. In the air conditioning management system, a plurality of spaces (e.g., plurality of houses) **H (H1** to **H3)** are selected as an air conditioned target of a center server **4.** In other words, an air conditioning management device of the present embodiment is configured to manage a plurality of air conditioning devices **1** for varying temperatures of a plurality of the spaces **H (H1** to **H3)** individually.

In each of the spaces **H1** to **H3,** an air conditioning device **1,** a controller **2,** and a home gateway **3** are provided. Note that, the same components as the embodiment **1** are designated as the same reference signs as the embodiment 1 and their explanations are omitted. Note that, the controllers **2** and the center server **4** constitute the air conditioning management device.

A receiver unit **4a** of the center server **4** obtains operation history information from each of the air conditioning devices **1** of the spaces **H1** to **H3.** Further, the receiver unit **4a** obtains the environmental information of each of the spaces **H1** to **H3** from an information server 5.

In summary, in the present embodiment, the receiver unit 4a serves as an operation history obtaining unit configured to obtain, for each of the plurality of the spaces **H (H1** to **H3),** the operation history of a corresponding one of the plurality of the air conditioning devices **1.** Further, the receiver unit 4a serves as an environmental information obtaining unit configured to obtain, for each of the plurality of the spaces **H (H1** to **H3),** the environmental history corresponding thereto.

A storage unit **4c** of the center server **4** stores in time series the operation history information and the environmental information associated with each other, with regard to each of the spaces **H1** to **H3.** In other words, the storage unit **4c** is configured to store, for each of the plurality of the spaces **H,** the combination of the operation information and the environmental information which are associated with each other on the basis of time. In the present embodiment, the environmental information is an outside air temperature.

An algorithm generation unit **4d** classifies the plurality of the spaces **H (H1** to **H3)** into a plurality of groups, and generates the operation algorithm for each of the plurality of groups.

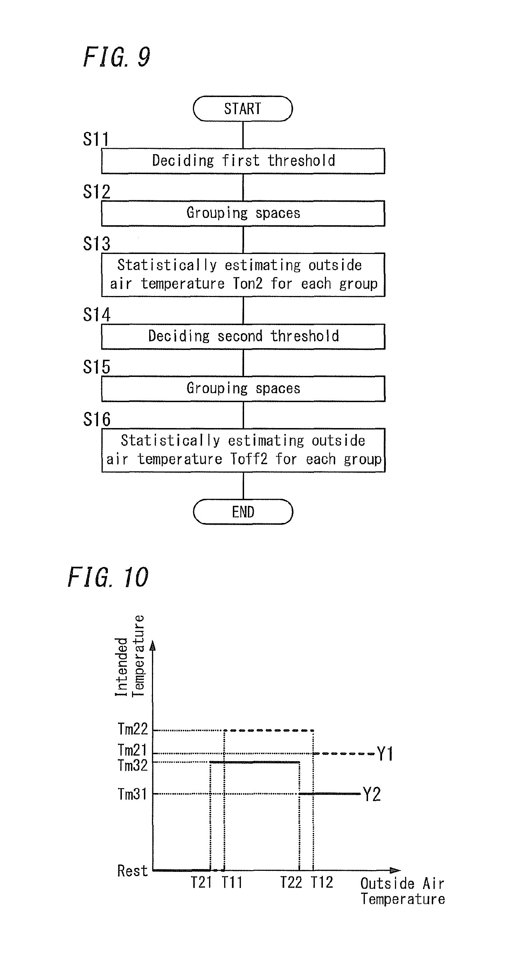

**FIG. 9** shows a flow chart illustrating a process of creating a control algorithm (deciding an outside air temperature Ton when the air conditioning device 1 starts to work, and an outside air temperature **Toff when** the air conditioning device **1** starts to rest) by the algorithm generation unit **4d** of the center server **4.**

In the present flow chart, it is determined which group, "wasting group in which the outside air temperature **Ton** is relatively low", "standard group (standard setting group) in which the outside air temperature **Ton** is standard", or "energy-saving group (energy saving setting group) in which the outside air temperature **Ton** is relatively high", each of the spaces **H1** to H3 (e.g., houses) is classified into. Note that, it is assumed that the air conditioning device 1 operates for cooling in summer.

First, the algorithm generation unit **4d** imports all data (the operation history information and the environmental information) of the spaces **H1** to **H3** during a predetermined time period to the current time, from the storage unit **4c.**

Next, the algorithm generation unit **4d** decides first thresholds **K1** and **K2** for grouping, from histories of the outside air temperature at time when the working operation is performed with regard to the spaces **H1** to **H3,** on the basis of the operation history information and the environmental information imported from the storage unit 4c **(S11).** In other words, the algorithm generation unit **4d** selects the environmental state (the outside air temperature) regarding the environmental information associated with the working start time with regard to the environmental history of each of the plurality of spaces **H,** and decides the first threshold **(K1, K2)** on the basis of the environmental state (the outside air temperature) indicated by the selected environmental information.

For example, with regard to the spaces **H1** to **H3,** the outside air temperature at time when the working operation is performed includes **Tg1, Tg2, ..., Tgn** (note that, **Tg1<Tg2<... <Tgn).** In this example, the first threshold **K1** for distinguishing the wasting group and the standard setting group is equal to **(2Tg1+Tgn)/**3**.** Further, the first threshold **K2** for distinguishing the standard setting group and the energy-saving group is equal to **(Tg1+2Tgn)/**3**.**

Next, for each of the spaces **H1** to **H3,** the algorithm generation unit **4d** calculates an outside air temperature **Ton1** (the third environmental information, the third environmental state) by averaging the outside air temperature at time when the working operation is performed, on the basis of the operation history information and the environmental information imported from the storage unit **4c.** In other words, the algorithm generation unit **4d** calculates the third environmental state (the outside air temperature **Ton1)** defined as an average of the environmental state regarding the environmental information associated with the working start time, for each space **H.**

Thereafter, the algorithm generation unit **4d** compares the outside air temperature **Ton1** of each of the spaces **H1** to **H3** with the first thresholds **K1** and **K2** to group the spaces **H1** to **H3 (S12).** In more detail, the algorithm generation unit **4d** classifies the plurality of the spaces **H** into the plurality of groups (the wasting group, the standard setting group, and the energy-saving group) in accordance with results of comparison of the third environmental state (the averaged outside air temperature **Ton1)** with the first threshold **(K1, K2).**

For example, the space **H** associated with the outside air temperature **Ton1** less than **K1** is classified into the wasting group. Further, the space **H** associated with the outside air temperature **Ton1** more than **K1** but less than **K2** is classified into the standard group. Further, the space **H** associated with the outside air temperature Ton1 more than K2 is classified into the energy-saving setting group.

After that, the algorithm generation unit **4d** calculates an outside air temperature (the on temperature) **Ton2** (the fourth environmental information, the fourth environmental state) by averaging the outside air temperature at time when the working operation is performed, on the basis of the operation history information and the environmental information imported from the storage unit **4c,** for each group **(S13).** In more detail, for each of the plurality of groups, the algorithm generation unit **4d** calculates an average of the environmental state regarding the environmental information associated with the working start time according to the operation history and the environmental history, and selects the average of the environmental state as the fourth environmental state (the on temperature **Ton2).** Note that, if one group includes a plurality of spaces **H,** the off outside air temperature **Ton2** of this group is calculated on the basis of the operation history information and the environmental information of the plurality of spaces **H** included in this group.

Subsequently, for each group constituted by one or more spaces **H,** the algorithm generation unit **4d** generates an operation algorithm (working algorithm) of making the air conditioning device **1** in a corresponding group start to work when the outside air temperature data (the current state of the environment) obtained from the information server **5** becomes equal to the outside air temperature **Ton2.** In other words, the algorithm generation unit **4d** generates the operation algorithm (the working algorithm) defining an operation of changing the operation state of the air conditioning device 1 from the resting state to the working state when the current state of the environment (the current outside air temperature) becomes identical to the fourth environmental state (the on temperature **Ton2).**

As described above, the algorithm generation unit **4d** classifies the spaces **H** into the wasting group, the standard group, and the energy-saving group, and sets the outside air temperature **Ton2** for making the air conditioning device 1 start to work, for each group.

Next, the algorithm generation unit **4d** decides second thresholds **K3** and **K4** for grouping, from histories of the outside air temperature at time when the resting operation is performed with regard to the spaces **H1** to **H3,** on the basis of the operation history information and the environmental information imported from the storage unit **4c (S14).** In other words, the algorithm generation unit **4d** selects the environmental state regarding the environmental information associated with the resting start time with regard to the environmental history of each of the plurality of spaces **H,** and decides the second threshold (K3, K4) on the basis of the environmental state indicated by the selected environmental information.

For example, with regard to the spaces **H1** to **H3,** the outside air temperature at time when the resting operation is performed includes **Th1, Th2,** ..., **Thn** (note that, **Th1<Th2<... <Thn).** In this example, the second threshold K3 for distinguishing the wasting group and the standard setting group is equal to **(2Th1+Thn)/**3**.** Further, the second threshold K4 for distinguishing the standard setting group and the energy-saving group is equal to **(Tg1+2Tgn)/3.**

Next, for each of the spaces **H1** to **H3,** the algorithm generation unit **4d** calculates an outside air temperature **Toff1** (the fifth environmental information, the fifth environmental state) by averaging the outside air temperature at time when the resting operation is performed, on the basis of the operation history information and the environmental information imported from the storage unit **4c.** In other words, the algorithm generation unit **4d** calculates the fifth environmental state (the outside air temperature **Toff1)** defined as an average of the environmental state regarding the environmental information associated with the resting start time, for each space **H.**

Thereafter, the algorithm generation unit **4d** compares the outside air temperature **Toff1** of each of the spaces **H1** to **H3** with the thresholds **K3** and **K4** to group the spaces **H1** to **H3 (S15).** In more detail, the algorithm generation unit **4d** classifies the plurality of the spaces H into the plurality of groups (the wasting group, the standard setting group, and the energy-saving group) in accordance with results of comparison of the fifth environmental state (the averaged outside air temperature **Toff1)** with the second threshold **(K3, K4).**

For example, the space **H** associated with the outside air temperature **Toff1** equal to or less than **K3** is classified into the wasting group. Further, the space **H** associated with the outside air temperature **Toff1** more than **K3** but equal to or less than **K4** is classified into the standard group. Further, the space **H** associated with the outside air temperature **Toff1** more than **K4** is classified into the energy-saving setting group.

After that, the algorithm generation unit **4d** calculates an outside air temperature (the off temperature) **Toff2** (the sixth environmental information, the sixth environmental state) by averaging the outside air temperature at time when the resting operation is performed, on the basis of the operation history information and the environmental information imported from the storage unit 4c, for each group **(S16).** In more detail, for each of the plurality of groups, the algorithm generation unit **4d** calculates an average of the environmental state regarding the environmental information associated with the resting start time according to the operation history and the environmental history, and selects the average of the environmental state as the sixth environmental state (the off temperature **Toff2).** Note that, if one group includes a plurality of spaces **H,** the off outside air temperature **Toff2** of this group is calculated on the basis of the operation history information and the environmental information of the plurality of spaces **H** included in this group.

Subsequently, for each group constituted by one or more spaces **H,** the algorithm generation unit **4d** generates an operation algorithm (resting algorithm) of making the air conditioning device 1 in a corresponding group start to rest when the outside air temperature data (the current state of the environment) obtained from the information server 5 becomes equal to the outside air temperature Toff2**.** In other words, the algorithm generation unit **4d** generates the operation algorithm (the resting algorithm) defining an operation of changing the operation state of the air conditioning device **1** from the working state to the resting state when the current state of the environment (the current outside air temperature) becomes identical to the sixth environmental state (the off temperature **Toff2).**

As described above, the algorithm generation unit **4d** classifies the spaces **H** into the wasting group, the standard group, and the energy-saving group, and sets the outside air temperature **Toff2** for making the air conditioning device 1 start to rest, for each group.

Further, the algorithm generation unit **4d** statistically estimates the intended temperature of the air conditioning device **1** for each of the wasting group, the standard group, and the energy-saving group. The process of estimating the intended temperature may be done by an averaging process or the like for each group.

Further, the algorithm generation unit **4d** generates the operation algorithm defining the operation of the air conditioning device 1 for each group.

For example, **FIG. 10** shows an example of the control algorithm decided by the algorithm generation unit **4d.** In **FIG. 10****, Y1** represents the control algorithm of the energy-saving group, and **Y2** represents the control algorithm of the wasting group.

With regard to the control algorithm **Y1** of the energy-saving group, both the outside air temperature (on temperature) **Ton2** for deciding when the air conditioning device **1** starts to work, and the outside air temperature (off temperature) **Toff2** for deciding when the air conditioning device **1** starts to rest are the outside air temperature **T11.** In more detail, when the current outside air temperature (the current state of the environment) is less than the outside air temperature **T11,** the air conditioning device **1** starts to rest, and when the current outside air temperature is equal to or more than the outside air temperature **T11,** the air conditioning device **1** starts to work. Further, when the outside air temperature (the current outside air temperature) is equal to or more than **T11** but is less than **T12,** the intended temperature of the air conditioning device 1 is set to the intended temperature **Tm22.** When the outside air temperature (the current outside air temperature) is equal to or more than **T12,** the intended temperature of the air conditioning device 1 is set to the intended temperature **Tm21** (< **Tm22).** Note that, the intended temperature **Tm22** is the intended temperature (the desired temperature) **Tm** calculated for the outside air temperature which is equal to or more than **T11** but is less than **T12,** and the intended temperature **Tm21** is the intended temperature (the desired temperature) **Tm** calculated for the outside air temperature which is equal to or more than **T12.**

With regard to the control algorithm **Y2** of the wasting group, both the outside air temperature (on temperature) **Ton2** for deciding when the air conditioning device **1** starts to work, and the outside air temperature (off temperature) **Toff2** for deciding when the air conditioning device 1 starts to rest are the outside air temperature **T21.** In more detail, when the current outside air temperature (the current state of the environment) is less than the outside air temperature **T21,** the air conditioning device 1 starts to rest, and when the current outside air temperature is equal to or more than the outside air temperature **T21,** the air conditioning device 1 starts to work. Further, when the outside air temperature (the current outside air temperature) is equal to or more than **T21** but is less than **T22,** the intended temperature of the air conditioning device 1 is set to the intended temperature **Tm32.** When the outside air temperature (the current outside air temperature) is equal to or more than **T22,** the intended temperature of the air conditioning device 1 is set to the intended temperature **Tm31** (< **Tm32).** Note that, the intended temperature **Tm32** is the intended temperature (the desired temperature) **Tm** calculated for the outside air temperature which is equal to or more than **T21** but is less than **T22,** and the intended temperature **Tm31** is the intended temperature (the desired temperature) Tm calculated for the outside air temperature which is equal to or more than **T22.**

In this regard, the intended temperature **Tm21** is higher than the intended temperature **Tm31,** and the intended temperature **Tm22** is higher than the intended temperature **Tm32,** and **T11** is higher than **T21,** and **T12** is higher than **T22.**

With regard to each space **H,** the device control unit **4e** sends a control algorithm corresponding to a group including a space **H** of interest, to the controller **2.** The device control unit **2a** of the controller **2** performs working and resting the air conditioning device **1,** setting the intended temperature, and the like, on the basis of this control algorithm, thereby realizing remote control on the air conditioning device 1.

Further, the controller **2** may present this control algorithm to a user in a form of an image or the like, in order to prompt the user to manually operate the air conditioning device **1** in line with this control algorithm.

As apparent from the above, if there is a plurality of spaces H, the present embodiment creates the control algorithm (the operation algorithm) by use of histories of the spaces H having the same tendency. Consequently, the present embodiment can perform air conditioning control having higher versatility.

As described above, the air conditioning management device (the controller **2** and the center server **4)** of the present embodiment is configured to manage operations of the air conditioning devices **1** for varying the temperatures of the plurality of spaces **H.** The operation history obtaining unit (the receiver unit **4a)** is configured to obtain the operation history for each of the air conditioning devices **1.** The environmental information obtaining unit (the receiver unit **4a)** is configured to obtain the environmental information for each of the spaces **H.** The storage unit **4c** is configured to store the operation history and the environmental information in association with each other as time series data for each of the spaces **H.** The algorithm generation unit **4d** decides a first threshold for grouping from one or more pieces of the environmental information at the time of a working operation, on the basis of the operation history and the environmental information of each of all of the spaces **H.** The algorithm generation unit **4d** calculates third environmental information (third environmental state) by averaging the environmental information at the time of the working operation, on the basis of the operation history and the environmental information, for each space **H.** The algorithm generation unit **4d** groups the plurality of spaces **H** on the basis of results of comparison of the third environmental information with the first threshold. The algorithm generation unit **4d** calculates fourth environmental information (fourth environmental state) by averaging the environmental information at the time of the working operation, on the basis of the operation history and the environmental information, for each group. The algorithm generation unit **4d** generates, for each group, the operation algorithm of working the air conditioning device 1 when the environmental information obtained by the environmental information obtaining unit (the receiver unit **4a)** becomes identical to the fourth environmental information.

Further, the air conditioning management device of the present embodiment is configured to manage operations of the air conditioning devices **1** for individually varying the temperatures of the plurality of spaces **H.** The operation history obtaining unit (the receiver unit **4a)** is configured to obtain the operation history for each of the air conditioning device **1.** The environmental information obtaining unit (the receiver unit **4a)** is configured to obtain the environmental information for each of the spaces **H.** The storage unit **4c** is configured to store the operation history and the environmental information in association with each other as time series data for each of the spaces **H.** The algorithm generation unit **4d** decides a second threshold for grouping from one or more pieces of the environmental information at the time of a resting operation, on the basis of the operation history and the environmental information of each of all of the spaces **H.** The algorithm generation unit **4d** calculates fifth environmental information (fifth environmental state) by averaging the environmental information at the time of the resting operation, on the basis of the operation history and the environmental information, for each space **H.** The algorithm generation unit **4d** groups the plurality of spaces **H** on the basis of results of comparison of the fifth environmental information with the second threshold. The algorithm generation unit **4d** calculates sixth environmental information (sixth environmental state) by averaging the environmental information at the time of the resting operation, on the basis of the operation history and the environmental information, for each group. The algorithm generation unit **4d** generates, for each group, the operation algorithm of resting the air conditioning device **1** when the environmental information obtained by the environmental information obtaining unit (the receiver unit **4a)** becomes identical to the sixth environmental information.

In other words, the air conditioning management device of the present embodiment includes the following fifth to eleventh features in addition to the first feature. Note that, the sixth to eleventh features are optional.

In the fifth feature, the air conditioning management device (the controller **2** and the center server **4)** is configured to manage a plurality of the air conditioning devices **1** for varying temperatures of a plurality of the spaces **H (H1** to **H3)** individually. The operation history obtaining unit (the receiver unit **4a)** is configured to obtain, for each of the plurality of the spaces **H,** the operation history of a corresponding one of the plurality of the air conditioning devices **1.** The environmental information obtaining unit (the receiver unit **4a)** is configured to obtain, for each of the plurality of the spaces **H,** the environmental history corresponding thereto. The storage unit 4c is configured to store, for each of the plurality of the spaces **H,** the combination of the operation information and the environmental information which are associated with each other on the basis of time. The algorithm generation unit **4d** is configured to classify the plurality of the spaces **H** into a plurality of groups, and generate the operation algorithm for each of the plurality of groups.

In the sixth feature realized in combination with the fifth feature, the algorithm generation unit **4d** is configured to: decide, for each of the plurality of the spaces **H,** a third environmental state (the outside air temperature **Ton1)** defined as an average of the environmental state regarding the environmental information associated with time (the working start time) at which the operation state of the air conditioning device 1 has been changed from a resting state to a working state; and classify the plurality of the spaces **H** into the plurality of groups in accordance with results of comparison of the third environmental state with a first threshold K1, K2).

In the seventh feature realized in combination with the sixth feature, the algorithm generation unit **4d** is configured to, with regard to the environmental history of each of the plurality of the spaces **H (H1** to **H3),** select the environmental state regarding the environmental information associated with time (the working start time) at which the operation state of the air conditioning device **1** has been changed from the resting state to the working state, and decide the first threshold **(K1, K2)** in accordance with the environmental state indicated by the environmental information selected.

In the eighth feature realized in combination with any one of the fifth to seventh features, the operation algorithm defines an operation of changing the operation state of the air conditioning device 1 from a resting state to a working state when a current state of the environment (current outside air temperature) becomes identical to a fourth environmental state (the on temperature **Ton2).** The algorithm generation unit 4d is configured to, for each of the plurality of groups, calculate an average of the environmental state regarding the environmental information associated with time (the working start time) at which the operation state of the air conditioning device **1** has been changed from the resting state to the working state according to the operation history and the environmental history, and select the average of the environmental state as the fourth environmental state.

In the ninth feature realized in combination with any one of the fifth to eighth features, the algorithm generation unit **4d** is configured to: decide, for each of the plurality of the spaces **H,** a fifth environmental state (the outside air temperature Toff1) defined as an average of the environmental state regarding the environmental information associated with time (the resting start time) at which the operation state of the air conditioning device 1 has been changed from a working state to a resting state; and classify the plurality of the spaces H into the plurality of groups in accordance with results of comparison of the fifth environmental state with a second threshold **K3, K4).**

In the tenth feature realized in combination with the ninth feature, the algorithm generation unit 4d is configured to, with regard to the environmental history of each of the plurality of the spaces **H (H1** to **H3),** select the environmental state regarding the environmental information associated with time (the resting start time) at which the operation state of the air conditioning device has been changed from the working state to the resting state, and decide the second threshold **(K3, K4)** in accordance with the environmental state indicated by the environmental information selected.

In the eleventh feature realized in combination with any one of the fifth, ninth, and tenth features, the operation algorithm defines an operation of changing the operation state of the air conditioning device **1** from a working state to a resting state when a current state (current outside air temperature) of the environment becomes identical to a sixth environmental state (off temperature **Toff2).** The algorithm generation unit **4d** is configured to, for each of the plurality of groups, calculate an average of the environmental state regarding the environmental information associated with time at which the operation state of the air conditioning device 1 has been changed from the working state to the resting state according to the operation history and the environmental history, and select the average of the environmental state as the sixth environmental state.

Note that, the air conditioning management system of the present embodiment includes: an air conditioning device **1** configured to vary a temperature of a space **H;** an air conditioning management device configured to manage the air conditioning device **1;** and an environment detector (the information server **5)** configured to detect environmental information indicative of a state of an environment of an inside of the space **H** or an outside of the space **H.** The air conditioning management device (the controller **2** and the center server **4)** includes the above first feature and optionally the fifth to eleventh features selectively. The environmental information obtaining unit (the receiver unit **4a)** is configured to obtain the environmental information from the environment detector (the information server **5).**

## Claims

1. An air conditioning management device for management of an air conditioning device for varying a temperature of a space, comprising:
an operation history obtaining unit configured to obtain an operation history defined as a history of operation information including an operation state of the air conditioning device;
an environmental information obtaining unit configured to obtain an environmental history defined as a history of environmental information indicative of an environmental state defined as a state of an environment of an inside of the space or an outside of the space;
a storage unit configured to store a combination of the operation information and the environmental information which are associated with each other on a basis of time in accordance with the operation history and the environmental history; and
an algorithm generation unit configured to refer to the storage unit and generate an operation algorithm defining a condition of the environmental state used for changing the operation state of the air conditioning device on a basis of the operation information and the environmental information.

2. The air conditioning management device according to claim 1, wherein
the operation algorithm defines an operation of changing the operation state of the air conditioning device when a current state of the environment satisfies the condition.

3. The air conditioning management device according to claim 2, wherein:
the operation algorithm defines an operation of changing the operation state of the air conditioning device from a resting state to a working state when the current state of the environment becomes identical to a first environmental state; and
the algorithm generation unit is configured to calculate an average of the environmental state regarding the environmental information associated with time at which the operation state of the air conditioning device has been changed from the resting state to the working state according to the operation history and the environmental history, and select the average of the environmental state as the first environmental state.

4. The air conditioning management device according to claim **2,** wherein:
the operation algorithm defines an operation of changing the operation state of the air conditioning device from a working state to a resting state when the current state of the environment becomes identical to a second environmental state; and
the algorithm generation unit is configured to calculate an average of the environmental state regarding the environmental information associated with time at which the operation state of the air conditioning device has been changed from the working state to the resting state according to the operation history and the environmental history, and select the average of the environmental state as the second environmental state.

5. The air conditioning management device according to claim **1,** wherein:
the air conditioning management device is configured to manage a plurality of the air conditioning devices for varying temperatures of a plurality of the spaces individually;
the operation history obtaining unit is configured to obtain, for each of the plurality of the spaces, the operation history of a corresponding one of the plurality of the air conditioning devices;
the environmental information obtaining unit is configured to obtain, for each of the plurality of the spaces, the environmental history corresponding thereto;
the storage unit is configured to store, for each of the plurality of the spaces, the combination of the operation information and the environmental information which are associated with each other on the basis of time; and
the algorithm generation unit is configured to classify the plurality of the spaces into a plurality of groups, and generate the operation algorithm for each of the plurality of groups.

6. The air conditioning management device according to claim 5, wherein
the algorithm generation unit is configured to:
decide, for each of the plurality of the spaces, a third environmental state defined as an average of the environmental state regarding the environmental information associated with time at which the operation state of the air conditioning device has been changed from a resting state to a working state; and
classify the plurality of the spaces into the plurality of groups in accordance with results of comparison of the third environmental state with a first threshold.

7. The air conditioning management device according to claim 6, wherein
the algorithm generation unit is configured to, with regard to the environmental history of each of the plurality of the spaces, select the environmental state regarding the environmental information associated with time at which the operation state of the air conditioning device has been changed from the resting state to the working state, and decide the first threshold in accordance with the environmental state indicated by the environmental information selected.

8. The air conditioning management device according to claim 5, wherein:
the operation algorithm defines an operation of changing the operation state of the air conditioning device from a resting state to a working state when a current state of the environment becomes identical to a fourth environmental state; and
the algorithm generation unit is configured to, for each of the plurality of groups, calculate an average of the environmental state regarding the environmental information associated with time at which the operation state of the air conditioning device has been changed from the resting state to the working state according to the operation history and the environmental history, and select the average of the environmental state as the fourth environmental state.

9. The air conditioning management device according to claim 5, wherein
the algorithm generation unit is configured to:
decide, for each of the plurality of the spaces, a fifth environmental state defined as an average of the environmental state regarding the environmental information associated with time at which the operation state of the air conditioning device has been changed from a working state to a resting state; and
classify the plurality of the spaces into the plurality of groups in accordance with results of comparison of the fifth environmental state with a second threshold.

10. The air conditioning management device according to claim 9, wherein
the algorithm generation unit is configured to, with regard to the environmental history of each of the plurality of the spaces, select the environmental state regarding the environmental information associated with time at which the operation state of the air conditioning device has been changed from the working state to the resting state, and decide the second threshold in accordance with the environmental state indicated by the environmental information selected.

11. The air conditioning management device according to claim 5, wherein:
the operation algorithm defines an operation of changing the operation state of the air conditioning device from a working state to a resting state when a current state of the environment becomes identical to a sixth environmental state; and
the algorithm generation unit is configured to, for each of the plurality of groups, calculate an average of the environmental state regarding the environmental information associated with time at which the operation state of the air conditioning device has been changed from the working state to the resting state according to the operation history and the environmental history, and select the average of the environmental state as the sixth environmental state.

12. An air conditioning management system comprising:
an air conditioning device configured to vary a temperature of a space;
an air conditioning management device configured to manage the air conditioning device; and
an environment detector configured to detect environmental information indicative of a state of an environment of an inside of the space or an outside of the space,
the air conditioning management device being defined by claim 1, and
the environmental information obtaining unit being configured to obtain the environmental information from the environment detector.
